# EUROPEAN PATENT APPLICATION

(11) **EP 4 838 771 A1**
(43) Date of publication of application: **11.11.2026**
(21) Application number: 24946823.2
(22) Date of filing: 08.08.2024
(51) Int. Cl.: H02M 1/10, H02M 1/00, H02M 1/088, H02M 1/32, H02M 3/158, H02M 7/219, H02M 7/5387, H02J 7/34, G21B 1/21

(54) **MAGNET DRIVING POWER SUPPLY, MAGNET DRIVING METHOD AND SYSTEM, AND FUSION REACTION SYSTEM**

(30) Priority: 11.07.2024 CN 202410930438
(71) Applicant: Shanghai Startorus Fusion Technology Company Limited, Shanghai 201808 (CN)
(72) Inventor: ZHOU, Hongran, Shanghai 201808 (CN); CHEN, Rui, Shanghai 201808 (CN); TAN, Yi, Shanghai 201808 (CN)
(74) Representative: Elzaburu S.L.P.
(86) International application number: PCT/CN2024/110737
(87) International publication number: WO 2026/011518

(57) **Abstract**

Provided in the present application are a magnet driving power supply, a magnet driving method and system, and a fusion reaction system. The magnet driving power supply comprises a capacitor unit and a plurality of control module sets, wherein each control module set comprises two control modules, all the control modules are connected in parallel, and each control module comprises two power units; in each control module, a first end of one power unit is connected to a positive electrode of the capacitor unit, a second end of the power unit and a first end of the other power unit are both connected to an auxiliary node, and a second end of the other power unit is connected to a negative electrode of the capacitor unit; auxiliary nodes in the two control modules in each control module set are respectively connected to the two ends of a magnet in a fusion reaction device; and on the basis of current parameters, the power units in each control module are controlled to switch on or off, enabling the staggered start-up of the plurality of control module sets, thereby driving the capacitor unit to transmit a current to the magnet. Thus, the magnet driving power supply achieves better performance in transmitting a current to a magnet.

## Description

The present application claims priority from the Chinese patent application No. 202410930438.3 filed with the China National Intellectual Property Administration on July 11, 2024 and entitled "MAGNET DRIVING POWER SUPPLY, MAGNET DRIVING METHOD AND SYSTEM, AND FUSION REACTION SYSTEM", which is incorporated herein by reference in its entirety.

### FIELD

The present application relates to the technical field of power electronics, and particularly to a magnet driving power supply, a magnet driving method and system, and a fusion reaction system.

### BACKGROUND

In a fusion reaction device, various magnets need to be installed to form different magnetic fields to appropriately control plasma in the fusion reaction device to induce a fusion reaction.

The magnets receive drive currents from connected power supplies. To form a desired magnetic field, the magnet requires the rate of change of the corresponding driving current to meet relevant requirements, precise control of the driving current is crucial for achieving the desired magnetic field. In related technologies, after the drive power supply is connected to the magnet, the drive current is released through natural discharge.

In this way, the current received by the magnets exhibits significant current ripple, resulting in a substantial difference between the actual current transmitted by the magnet driving power supply to the magnets and the reference current, leading to poor current transmission effectiveness from the magnet driving power supply to the magnets and an inability to generate the required magnetic fields.

### SUMMARY OF THE INVENTION

The present application provides a magnet driving power supply, a magnet driving method and system, and a fusion reaction system. A current with a small current ripple can be transmitted to the magnet by the magnet driving power supply, ensuring that the current transmitted to the magnet is closer to the current required by the magnet, and improving the effect of transmitting current to the magnet.

According to an aspect of the embodiments of the present application, a magnet driving power supply is provided, which includes a capacitor unit and multiple control module sets, where each control module set includes two control modules, the multiple control module sets are connected in parallel, the two control modules in each control module set are connected in parallel, and each control module includes two power units;
in each control module, a first end of one power unit is connected to a positive electrode of the capacitor unit, a second end of the one power unit and a first end of the other power unit are both connected to an auxiliary node, and a second end of the other power unit is connected to a negative electrode of the capacitor unit; auxiliary nodes of the two control modules in each control module set are respectively connected to two ends of a magnet in a fusion reaction device; and
the power units in each control module are configured to be turned on or off based on current parameters in a controlled manner, so that the multiple control module sets are started in a time-division manner to drive the capacitor unit to transmit current to the magnet, where the current parameters include a reference current of the magnet, an actual current transmitted in each control module, and an actual current received by the magnet.

According to another aspect of the embodiments of the present application, a magnet driving method applicable to the above-mentioned magnet driving power supply is provided. The method includes:
acquiring, in a process in which the capacitor unit in the magnet driving power supply transmits current to the magnet, a first actual current transmitted in each control module of the magnet driving power supply and a second actual current transmitted in the magnet; and
transmitting, based on the first actual current, the second actual current, and the reference current of the magnet, a drive signal to the power units in each control module set to drive the power units to be turned on or off, so that each control module set is started in a time-division manner to drive the capacitor unit in the magnet driving power supply to transmit current to the magnet.

According to a further aspect of the embodiments of the present application, a magnet driving system is provided, which includes a power control unit and at least one magnet driving power supply, and the magnet driving power supply includes the above-mentioned magnet driving power supply. The power control unit is configured to execute the above-mentioned magnet driving method to control each power unit in the magnet driving power supply to drive the magnet driving power supply to transmit current to a connected magnet.

According to another aspect of the present application, a fusion reaction system is provided, which includes: a fusion reaction device and the above-mentioned magnet driving system. At least one magnet driving power supply in the magnet driving system is respectively connected to at least one magnet in the fusion reaction device, and each magnet driving power supply is configured to transmit pulsed current to a connected magnet, and the at least one magnet includes at least one of a central solenoid magnet, a poloidal field magnet, and a toroidal field magnet.

In the magnet driving power supply provided by the present application, each set among the multiple control module sets includes two control modules, and all control modules are connected in parallel, each control module includes two power units connected in series. The auxiliary nodes between the two control modules in each set are connected to the two ends of the magnet, indicating that the two control modules are located at the two ends of the magnet, respectively. The power units in each control module are controlled to be turned on or off, enabling the multiple control module sets to start at different times. This results in a phase shift in the current waveforms output by different control module sets. Consequently, the current output from the multiple control module sets to the magnet can be a superposition of currents at different phases, ensuring a small current ripple in the overall current output to the magnet and providing a relatively stable current to the magnet. Furthermore, each power unit is controlled to turn on or off based on the reference current of the magnet and the actual current in the circuit, which ensures that the current output to the magnet is closer to the reference current of the magnet, improving the current transmission performance of the magnet driving power supply to the magnet and ensuring effective formation of the magnetic field by the magnet. Accordingly, it can be ensured that the magnetic fields generated by the magnets can effectively control the plasma to enhance the fusion reaction effectiveness of the fusion reaction device.

### BRIEF DESCRIPTION OF THE DRAWINGS

FIG. 1 is a schematic diagram showing a circuit structure of a magnet driving power supply according to an embodiment of the present application;
FIG. 2 is a schematic diagram showing a circuit structure of another magnet driving power supply according to an embodiment of the present application;
FIG. 3 is a schematic diagram showing a waveform of a pulsed current transmitted to a magnet through natural discharge according to related technologies;
FIG. 4 is a schematic diagram showing a waveform of a pulsed current transmitted to a magnet according to an embodiment of the present application;
FIG. 5 is a schematic diagram showing a circuit structure of still another magnet driving power supply according to an embodiment of the present application;
FIG. 6 is a waveform diagram showing voltage changes across capacitor units before adding a filtering circuit according to an embodiment of the present application;
FIG. 7 is a waveform diagram showing voltage changes across capacitor units after adding a filtering circuit according to an embodiment of the present application;
FIG. 8 is a flowchart of a magnet driving method according to an embodiment of the present application;
FIG. 9 is a schematic diagram showing a current waveform outputted by a magnet driving power supply according to an embodiment of the present application;
FIG. 10 is a schematic diagram showing another current waveform that can be output by a magnet driving power supply according to an embodiment of the present application; and
FIG. 11 is a simplified schematic diagram showing a process for generating drive signals for each power unit according to an embodiment of the present application.

### DETAILED DESCRIPTION OF THE INVENTION

The following description includes many specific details to provide a thorough understanding of the present application. However, the present application can be implemented in various ways different from those described herein. A person skilled in the art can make similar extensions without departing from the essence of the present application. Therefore, the present application is not limited by the specific implementations disclosed below.

The terms used in one or more embodiments of the present application are for the purpose of describing specific embodiments only and are not intended to limit the one or more embodiments of the present application. In the one or more embodiments of the present application and the appended claims, the singular forms "a", "an", and "the" are intended to include the plural forms as well, unless the context clearly indicates otherwise. It should also be understood that the term "and/or" used in one or more embodiments of the present application refers to and encompasses any and all possible combinations of one or more of the associated listed items. The term "at least one" in one or more embodiments of the present application means "one or more, " and "multiple" means "two or more." The term "include" is an open-ended description and should be understood as "including but not limited to". It may include other elements in addition to those already described.

It should be understood that although terms such as "first" and "second" may be used in one or more embodiments of the present application to describe various information, these terms should not be limited to these terms alone. These terms are used only to distinguish the same type of information from each other. For example, without departing from the scope of one or more embodiments of the present application, "first" may also be referred to as "second", and similarly, "second" may also be referred to as "first". Depending on the context, the term "if" as used herein may be interpreted as "when", "while" or "in response to determining".

In the field of electronic technology, various electronic devices require power supplies for operation, and the power supplies required for different electronic devices may vary. Fusion reaction devices (such as tokamak devices) typically require various magnets, including central solenoid (CS) magnets, poloidal field (PF) magnets, and toroidal field (TF) magnets. Each type of magnet may be a type of coil. Each type of magnet in the fusion reaction device is connected to a corresponding magnet driving power supply and receives the current transmitted by the magnet driving power supply. Based on this current, the magnets generate corresponding magnetic fields to control the displacement, magnitude, and direction of the plasma in the reaction chamber, inducing a nuclear fusion reaction in the plasma. The magnetic fields generated by each magnet determine the effectiveness of the nuclear fusion reaction, and these magnetic fields are, in turn, determined by the current they receive. Therefore, precise control of the magnet driving power supply is crucial in nuclear fusion scenarios.

In fusion reaction devices operating in a multi-stroke mode, each type of magnet requires the transmission of a pulsed current, with each magnet having different current requirements and high current demands. For example, CS magnets require positive and negative pulsed currents, PF magnets require pulsed currents with controllable slopes, and TF magnets require pulsed currents that can be maintained for a certain period (e.g., approximately 1 second). Usually, different magnet driving power supplies are designed respectively for these different magnets, in this way, the power supply reuse rate is low, and the design and implementation costs of the power supplies are relatively high. Moreover, in the current magnet driving power supply, after connecting the energy storage unit to the load (i.e., the magnet) via an electronic switch, a natural discharge method is employed to enable the energy storage unit to instantaneously release current to the load. In this way, the magnet driving power supply outputs a current with fewer adjustable parameters, making it difficult to meet the magnet's requirements for controlling the rise and fall rates of the required current, as well as the requirement for low-ripple flat-top segment of the pulsed current, that is, the requirement to keep the current ripple of the pulsed current small over a period of time.

The embodiments of the present application provide a magnet driving power supply, which can output current with a small current ripple to the magnet, achieve precise control over the output current, ensure that the current output to the magnet better meets the requirements of the magnet, correspondingly achieve effective control over the plasma in the fusion reaction device, and improve the fusion reaction effect. In addition, this magnet driving power supply can be reused for different magnets to reduce power supply design and implementation costs. The embodiments of the present application also relate to a magnet driving method and a magnet driving system, as well as a fusion reaction system, which will be introduced one by one below.

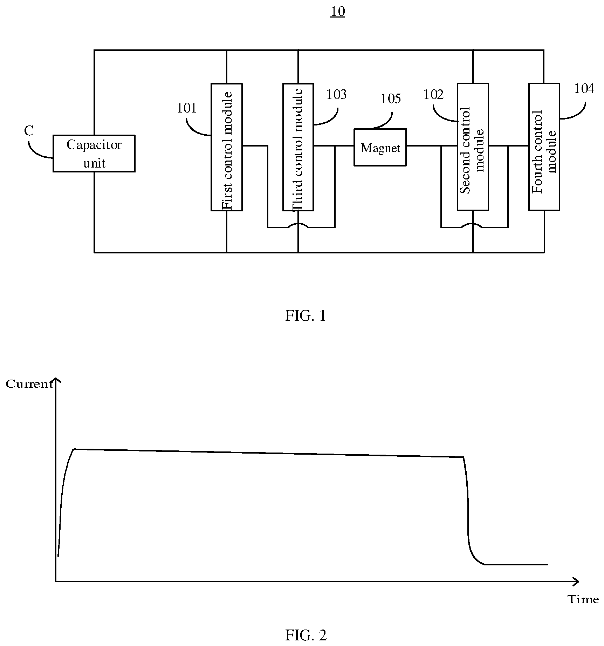

FIG. 1 is a schematic diagram showing a circuit structure of a magnet driving power supply according to an embodiment of the present application; and FIG. 2 is a schematic diagram showing a circuit structure of another magnet driving power supply according to an embodiment of the present application. Referring to FIGS. 1 and 2, the magnet driving power supply 10 includes capacitor units C and multiple control module sets, each control module set includes two control modules. FIG. 1 illustrates an example where the magnet driving power supply 10 includes four control modules: the first control module 101, the second control module 102, the third control module 103, and the fourth control module 104. The first control module 101 and the second control module 102 are considered as one set, while the third control module 103 and the fourth control module 104 are considered as another set. FIG. 2 illustrates an example where the magnet driving power supply 10 includes eight control modules divided into four sets. In FIG. 2, only the first control module 101, the second control module 102, the third control module 103, and the fourth control module 104 are labeled.

The multiple control module sets in the magnet driving power supply 10 are connected in parallel, within each set, the two control modules are also connected in parallel, and each control module is connected across the capacitor unit C. In an implementation, the capacitor unit C may be configured as a supercapacitor bank composed of multiple supercapacitor cells or multiple supercapacitor modules connected in series to ensure a high output voltage, such as up to 500 volts.

Referring to FIG. 2, each control module includes two series-connected power units. For example, the first control module 101 includes a first power unit T11 and a second power unit T12, while the second control module 102 includes a third power unit T13 and a fourth power unit T14. Other control module sets may be referred to the descriptions of the first control module 101 and the second control module 102, which will not be described in detail herein. In the embodiments of the present application, the number of control module sets in the magnet driving power supply may be two, three, or even more, which is not described in detail herein.

In each control module, a first end of one power unit is connected to a positive electrode of the capacitor unit, a second end of the one power unit and a first end of another power unit are both connected to an auxiliary node, which is a point between the two power units in the control module, and a second end of the other power unit is connected to a negative electrode of the capacitor unit. The auxiliary node in each control module is connected to the magnet in the fusion reaction device, and the auxiliary nodes in the two control modules of each set are respectively connected to the two ends of the magnet. Thus, each control module is equivalent to one half-bridge circuit, and the two control modules in each set form one full-bridge circuit. The magnet driving power supply includes multiple parallel full-bridge circuits, with each full-bridge circuit including two parallel half-bridge circuits located at the two ends of the magnet.

In FIG. 2, in the first control module 101, the first end of the first power unit T11 is connected to the positive electrode of the capacitor unit C. The second end of the first power unit T11 and the first end of the second power unit T12 are both connected to the first auxiliary node F1, and the second end of the second power unit T12 is connected to the negative electrode of the capacitor unit C. The first power unit T11 and the second power unit T12 form one half-bridge circuit. The connection method for the components in the second control module 102 is the same as that in the first control module 101. The third power unit T13 and the fourth power unit T14 also form one half-bridge circuit. The first auxiliary node F1 in the first control module 101 and the second auxiliary node F2 in the second control module 102 are respectively connected to the two ends of the magnet 105 in the fusion reaction device, such as the two electrodes corresponding to the two ends of the magnet 105. Similar to the connection manner of the first control module 101 and the second control module 102, the power units in the other control modules also form half-bridge circuits, and the power units in each control module set form one full-bridge circuit. Accordingly, the magnet driving power supply 10 includes four parallel full-bridge circuits. Each full-bridge circuit outputs current to the magnet 105, and the current received by the magnet 105 is the combined current transmitted by the four full-bridge circuits.

The power units in the magnet driving power supply 10 (such as the first power unit T11, the second power unit T12, the third power unit T13, and the fourth power unit T14) may be full-power devices with switching times on the microsecond level. The power units can withstand high voltages, such as up to 1200 volts. For example, the power unit includes an insulated-gate bipolar transistor (IGBT). The first end of the power unit is a collector, and the second end of the power unit is an emitter. In some implementations, the power unit further includes an integrated gate-commutated thyristor (IGCT) or a gate-turn-off thyristor (GTO).

In the embodiments of the present application, the power units in each control module can be controlled to turn on or off, so that the multiple control module sets in the magnet driving power supply 10 start sequentially and drive the capacitor unit C to transmit current to the magnet 105. Each control module set are started in a time-division manner, so that the capacitor unit C starts transmitting current to the magnet 105 through different control module sets at different times. This approach is equivalent to interleaving and paralleling each control module set of the magnet driving power supply 10. The current received by the magnet 105 is a combination of the currents transmitted by multiple control module sets. This starting method can cause the phases of the current waveforms output by different control module sets to be staggered. Consequently, the current received by the magnet 105 can be a superposition of currents at different phases transmitted by multiple control module sets, avoiding the superposition of current peaks or troughs from different control module sets transmitted to the magnet 105, which prevents significant current ripple in the current received by the magnet 105, ensuring that a stable current is received by the magnet 105. In a case where the magnet 105 needs to receive a pulsed current, the requirement for low-ripple flat-top segment of this pulsed current can be met.

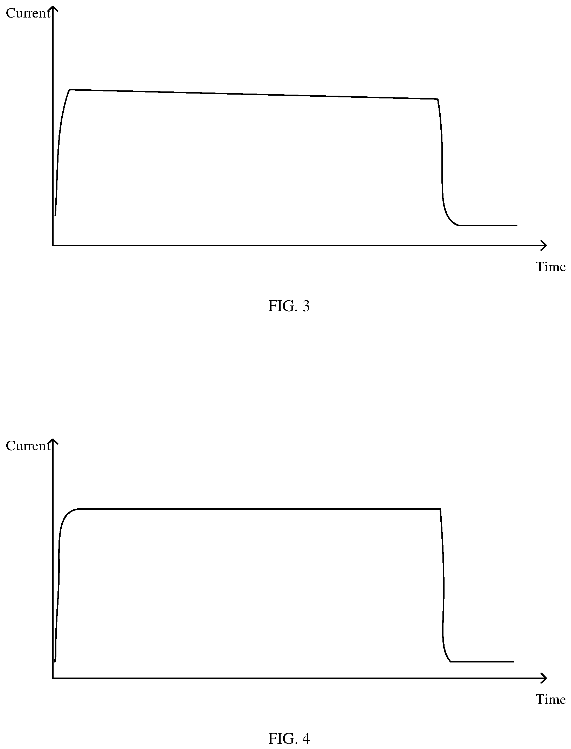

For example, FIG. 3 is a schematic diagram showing a waveform of a pulsed current transmitted to a magnet through natural discharge according to related technologies; and FIG. 4 is a schematic diagram showing a waveform of a pulsed current transmitted to a magnet according to an embodiment of the present application. From FIGS. 3 and 4, it can be seen that using natural discharge, there is a continuous decrease in current to a certain extent in the flat-top segment. In contrast, using the method of transmitting current to the magnet provided by the embodiments of the present application, the current ripple is smaller in the flat-top segment, and the current can remain basically stable, meeting the current requirements of the magnet.

In the embodiments of the present application, the power units in each control module can be controlled to turn on or off based on current parameters, which include: the reference current of the magnet, the actual current transmitted in each control module, and the actual current received by the magnet. Therefore, adaptive control of the power units in each control module can be performed based on the reference current of the magnet and the actual current in the magnet driving power supply. This control method for the magnet driving power supply is relatively flexible. Adjusting the actual current received by the magnet according to this reference current can make the current received by the magnet closer to its reference current to ensure better current transmission to the magnet. In the embodiments of the present application, the currents output by each control module can be controlled separately to achieve better current sharing among the control module sets and suppress circulating currents in the circuit to a certain extent. The specific method for controlling the power units based on current parameters will be detailed later in the magnet driving method and will not be elaborated here.

The magnet 105 connected to the magnet driving power supply 10 can be any type of magnet in a fusion reaction device, such as a central solenoid magnet, a poloidal field magnet, or a toroidal field magnet. Since this magnet driving power supply 10 can flexibly control each control module to make the magnet driving power supply 10 transmit current that meets the magnet's requirements, the magnet driving power supply 10 provided by the embodiments of the present application can supply current to different magnets. Thus, the magnet driving power supply 10 exhibits a high reusability rate, eliminating the need to design and manufacture different magnet driving power supplies for different magnets, reducing costs, and simplifying the magnet driving process.

The process of the magnet driving power supply 10 using its capacitor units C to transmit current to the magnet 105 includes multiple control periods. For example, the capacitor units C can continuously transmit current to the magnet 105 for two seconds, with each control period lasting 200 microseconds. In each control period, the power units in each control module are controlled to transmit current to the magnet according to the corresponding reference current. For example, multiple control module sets in the magnet driving power supply 10 can be started in a time-division manner in each control period, with equal startup time intervals between any two control module sets. This startup time interval can be the duration obtained by evenly dividing the control period among the multiple control module sets, i.e., the startup time interval can be equal to the duration obtained by dividing the control period by the number of control module sets. The duration of each control module being in the on state can be determined based on the reference current of the magnet.

The multiple control module sets can be started sequentially. For example, the four control module sets in FIG. 2 can be started sequentially in one control period, with the startup time interval between adjacent control module sets being one-fourth of the control period duration. Thus, the current output by each control module set can be phase-shifted by 90 degrees relative to the current output by the previously started control module set. In some implementations, if the magnet driving power supply 10 includes three control module sets, the currents output by two sequentially started control module sets among these three can be phase-shifted by 120 degrees. In some implementations, the startup time intervals between different control module sets can also differ, or the control periods may not be evenly divided among the control module sets, which is not limited here.

In some implementations, control of the power units in each control module of the magnet driving power supply can be based on the actual current transmitted in that control module and the actual current transmitted in the magnet in the previous control period, as well as the reference current of the magnet in the subsequent control period, which ensures that the actual current in the magnet in the subsequent control period is as close as possible to its reference current.

The embodiments of the present application take the structure shown in FIG. 1 or FIG. 2 as an example for the magnet driving power supply. In some implementations, the circuit structures shown in FIGS. 1 and 2 may only represent one power module within the magnet driving power supply. The magnet driving power supply includes multiple parallel power modules that jointly transmit current to the magnet to increase the current transmitted to the magnet. Adopting this modular design can improve the applicability of the magnet driving power supply and reduce costs.

In summary, in the magnet driving power supply provided by the embodiment of the present application, each set among the multiple control module sets includes two control modules, and all control modules are connected in parallel, each control module includes two power units connected in series. The auxiliary nodes between the two control modules in each set are connected to the two ends of the magnet, indicating that the two control modules are located at the two ends of the magnet, respectively. The power units in each control module are controlled to be turned on or off, enabling the multiple control module sets to start at different times. This results in a phase shift in the current waveforms output by different control module sets. Consequently, the current output from the multiple control module sets to the magnet can be a superposition of currents at different phases, ensuring a small current ripple in the overall current output to the magnet and providing a relatively stable current to the magnet. Furthermore, each power unit is controlled to turn on or off based on the reference current of the magnet and the actual current in the circuit, which ensures that the current output to the magnet is closer to the reference current of the magnet, improving the current transmission performance of the magnet driving power supply to the magnet. Accordingly, it can be ensured that the magnetic fields generated by the magnets can effectively control the plasma to enhance the fusion reaction effectiveness of the fusion reaction device.

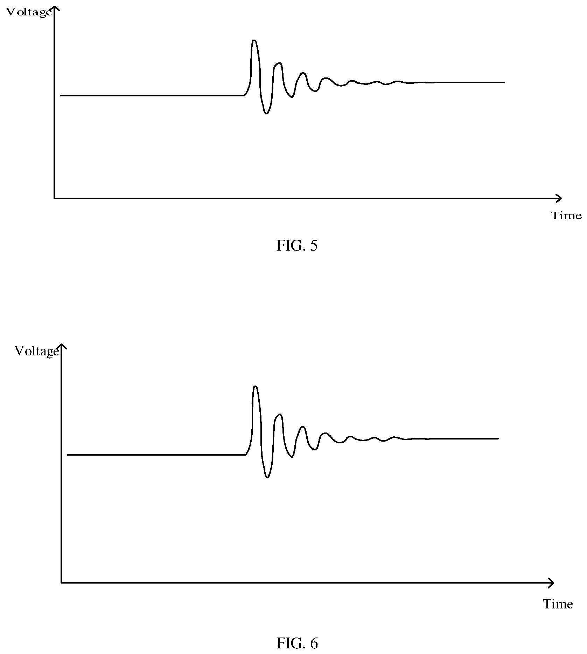

The preceding description only introduces the magnet driving power supply 10 with reference to some essential components in the magnet driving power supply 10. Based on the preceding structure, the magnet driving power supply 10 can also include other additional components. FIG. 5 is a schematic diagram showing a circuit structure of a magnet driving power supply according to an embodiment of the present application. Below, the scenario where the magnet driving power supply 10 includes other additional components is introduced in conjunction with FIG. 5.

As shown in FIG. 5, the magnet driving power supply 10 further includes multiple current-sharing inductors. The auxiliary node in each control module is connected to the magnet 105 through one of the current-sharing inductors. The inductance value of these current-sharing inductors can be relatively large. The control modules and current-sharing inductors in the magnet driving power supply 10 can form a power converter to adjust the current transmitted to the magnet 105. FIG. 5 takes the magnet driving power supply 10 including eight current-sharing inductors as an example, denoted sequentially as L1 to L8. For instance, the first auxiliary node F1 in the first control module 101 is connected to one end of the magnet 105 through the first current-sharing inductor L1, and the second auxiliary node F2 in the second control module 102 is connected to the other end of the magnet 105 through the second current-sharing inductor L2. Other control module sets can be referred to the descriptions of the first control module 101 and the second control module 102, which will not be described in detail herein. By incorporating current-sharing inductors, an appropriate inductance value can be introduced into each control module, suppressing the flow of unbalanced currents and promoting uniform current distribution among the control modules to avoid situations where some branches are overloaded while others are underutilized, enhancing the overall efficiency, stability, and reliability of the magnet driving power supply.

Continuing to refer to FIG. 5, the magnet driving power supply 10 can further include a filter circuit composed of a filter inductor L and a filter capacitor Cr. The filter inductor L can be located between the capacitor unit C and respective control modules, with the filter capacitor Cr connected in parallel with each control module. In each control module, the first end of one power unit is connected to the positive electrode of the capacitor unit C through the filter inductor L. The first end of the filter inductor L is connected to the first end of this power unit and the positive electrode of the filter capacitor Cr. The second end of the filter inductor L is connected to the positive electrode of the capacitor units C, and the negative electrode of the filter capacitor Cr is connected to the negative electrode of the capacitor units C. For example, in FIG. 5, two ends of the filter inductor L are connected to the first end of the first power unit T11 in the first control module 102 and the positive electrode of the capacitor units C, respectively. The positive electrode of the filter capacitor Cr is connected to the first end of the filter inductor L and the first end of the first power unit T11, while the negative electrode of the filter capacitor Cr is connected to the negative electrode of the capacitor units C and the second end of the second power unit T12.

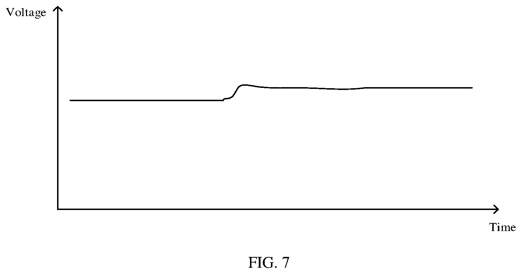

The magnet driving power supply 10 uses supercapacitors as energy storage elements (i.e., capacitor units C). Due to the relatively large equivalent series resistance (ESR) and equivalent series inductance (ESL) of the supercapacitor bank, when the capacitor units C output a large current, the sudden turn-off of the subsequent converter composed of each control module and current-sharing inductor can generate a high voltage spike across the capacitor units C, potentially causing damage to the capacitor units C. FIG. 6 is a waveform diagram showing voltage changes across capacitor units before adding a filtering circuit according to an embodiment of the present application; and FIG. 7 is a waveform diagram showing voltage changes across capacitor units after adding a filtering circuit according to an embodiment of the present application. From FIGS. 6 and 7, it can be seen that the addition of the filter circuit achieves a significant voltage spike absorption effect, which can mitigate the impact of voltage variations on the capacitor unit when the post-stage converter is turned off, reduce the risk of damage to the capacitor unit, and improve its operational reliability.

Continuing to refer to FIG. 5, the magnet driving power supply 10 can also include a rectifier bridge module 106, a current-limiting resistor R, and a charging switch K. The rectifier bridge module 106 is connected to the capacitor units C through the current-limiting resistor R and the charging switch K. For example, both the current-limiting resistor R and the charging switch K can be located between the positive electrode of the capacitor units C and respective control modules, and the rectifier bridge module 106 is further connected to an external power source. The capacitor units C can receive current transmitted from the external power source through the rectifier bridge module 106 and the current-limiting resistor R in a case where the charging switch K is turned on.

The rectifier bridge module 106 includes four diodes arranged in two parallel sets of two series-connected diodes each. The two electrodes of the external power source can be connected to the nodes between each set of two diodes, respectively. The external power source can be an AC power source (e.g., the power grid). The rectifier bridge module 106 can convert the AC power transmitted from the external power source into DC pulsed power and then transmit it to the capacitor units C. After the capacitor units C are charged to the required voltage, the charging switch K can be opened to stop the external power source from charging the capacitor units C and disconnect the external power source from the magnet driving power supply. Subsequently, each control unit can be controlled to enable the capacitor units C to transmit current to the magnet 105 to drive the magnet 105 to operate. Since the magnets in a fusion reaction device require high transient pulsed power, directly connecting the current input of the magnet to an external power source may cause a shock to the external power source. Therefore, driving the magnets in the fusion reaction device by first charging the capacitor units and then supplying power from them avoids shocking the external power source.

The embodiments of the present application also provide a magnet driving system for driving at least one type of magnet in a fusion reaction device. The at least one type of magnet includes at least one of a central solenoid magnet, a poloidal field magnet, and a toroidal field magnet. The magnet driving system includes a power control unit and at least one of the above-mentioned magnet driving power supplies 10. Each magnet driving power supply 10 can be connected to one type of magnet in the fusion reaction device to transmit current and drive that type of magnet. The power control unit can control each magnet driving power supply 10, such as controlling the power units in the magnet driving power supply, to ensure that each magnet driving power supply 10 transmits appropriate current to the connected magnet. In some implementations, the power control unit can also control the charging switch K in the magnet driving power supply 10 to manage the charging process of the capacitor units C in each magnet driving power supply 10.

In some implementations, the magnet driving system can also include a monitoring unit. The monitoring unit can monitor the current or voltage at various positions in the magnet driving power supply, such as the current transmitted in each control module and the current transmitted in the magnet connected to the magnet driving power supply, and transmit the monitored information to the power control unit. This facilitates the power control unit to control the magnet driving power supply based on the actual current transmission conditions in the circuit.

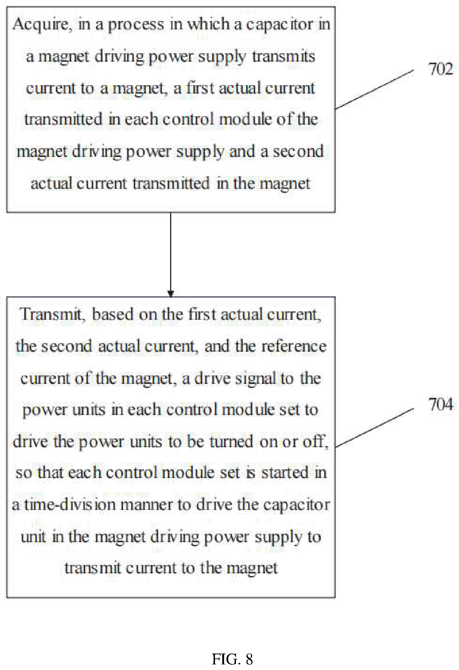

The embodiments of the present application also provide a magnet driving method that can be executed by the power control unit to control the magnet driving power supply to transmit current to the connected magnet and drive the magnet to perform corresponding operations. FIG. 8 is a flowchart of a magnet driving method according to an embodiment of the present application. As shown in FIG. 8, the method includes the following steps 702 and 704.

In step 702, in a process in which a capacitor unit in a magnet driving power supply transmits current to a magnet, a first actual current transmitted in each control module of the magnet driving power supply and a second actual current transmitted in the magnet are acquired.

The power control unit can monitor the current transmitted at various positions in the circuit through the monitoring unit in the process of the capacitor units in the magnet driving power supply transmitting current to the magnet, to obtain the first actual current transmitted in each control module of the magnet driving power supply and the second actual current transmitted in the magnet. In the embodiments of the present application, when the power control unit obtains the current, it actually refers to obtaining information about the current, such as its value. For example, for the magnet driving power supply 10 shown in FIG. 5, the power control unit can obtain the first actual current transmitted by the eight control modules (e.g., Iₐ₁, I_{b1}, I_{c1}, I_{d1}, Iₐ₂, I_{b2}, I_{c2}, I_{d2}, respectively) and the load current I_{load} on the magnet 105, which is the second actual current.

Step 704, based on the first actual current, the second actual current, and the reference current of the magnet, a drive signal are transmited to the power units in each control module set to drive the power units to be turned on or off, so that each control module set is started in a time-division manner to drive the capacitor unit in the magnet driving power supply to transmit current to the magnet.

Different control module sets have different corresponding startup times, such as each control module set having a preset startup time. The power control unit can transmit drive signals to the power units in each control module set at their corresponding startup times to drive the power units to turn on and start the control modules. After controlling each control module set to start, the power control unit continues to transmit drive signals to each power unit based on the obtained first actual current of that control module set, the second actual current of the magnet, and the reference current of the magnet, controlling the duration for which each power unit remains in the on state to make the actual current of the magnet as close as possible to its reference current. The reference current of the magnet may vary at different times, so the power control unit needs to continuously control the power units of each control module accordingly.

The process of the capacitor units transmitting current to the magnet can be divided into multiple control periods. The power control unit can control the magnet driving power supply based on the reference current corresponding to each control period in that period to ensure that the magnet receives the required current in that period. This ensures that the capacitor units transmit current that meets the magnet's requirements at all times to ensure better current transmission to the magnet. For example, the power control unit can obtain the first actual current transmitted by each control module and the second actual current transmitted by the magnet in each control period to control the magnet driving power supply accordingly in the next control period based on the actual current in the current period and the reference current in the next control period.

Taking the process of transmitting current from the capacitor unit to the magnet, which includes n control periods (n ≥ 2), as an example, in step 702 the power control unit can acquire, in the i^{th} control period, the first actual current transmitted in each control module of the magnet driving power supply, as well as the second actual current transmitted in the magnet, where 1 ≤ i ≤ n-1. The power control unit can also continuously acquire the reference current of the magnet in each control period, or can acquire in advance the reference current of the magnet for each control period. In step 704 , the power control unit can transmit drive signals to the power units in each control module set in the (i+1)-th control period based on the acquired first actual current, second actual current, and the reference current of the magnet in the (i+1)-th control period to drive the power units to turn on or off.

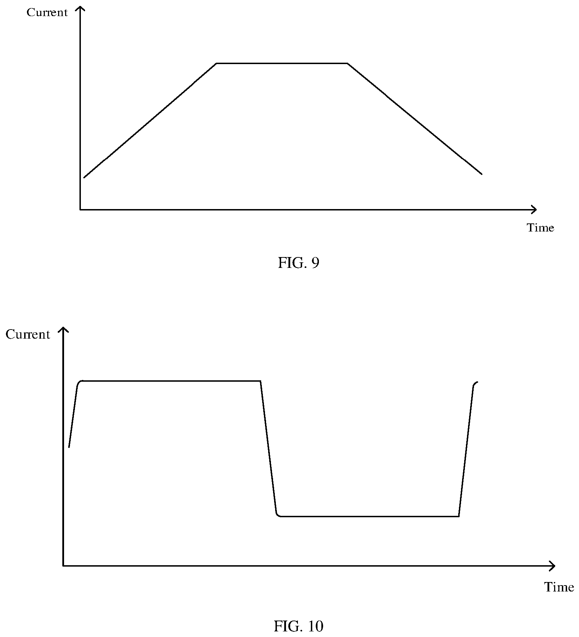

FIG. 9 is a schematic diagram showing a current waveform that can be output by a magnet driving power supply according to an embodiment of the present application; and FIG. 10 is a schematic diagram showing a current waveform that can be output by a magnet driving power supply according to an embodiment of the present application. In the embodiments of the present application, the magnet driving power supply can output a current with small ripple and no drop in the flat-top segment as shown in FIG. 4, a current with adjustable rise and fall rates as shown in FIG. 9, and a positive and negative pulsed current as shown in FIG. 10. Currents with different waveforms can be applied to different magnets. The currents shown in FIGS. 4, 9, or 10 can also represent the reference currents of the magnet, including the reference currents over multiple control periods from the start of power supply by the capacitor unit to the end of power supply. The power control unit can determine the reference currents in each control period based on this waveform diagram and then control the magnet driving power supply accordingly.

In an implementation, the step 704 of transmitting, based on the first actual current, the second actual current, and the reference current of the magnet, a drive signal to the power units in each control module set in a time-sharing manner may include the following steps 7042 to 7048.

In step 7042, overall current of the magnet is determined based on the first actual current and the second actual current.

The power control unit can first determine the total currents of the control modules connected to two ends of the magnet based on the acquired first actual currents of each control module, resulting in two total currents corresponding to the two ends. Subsequently, if the differences between at least two of the second actual current of the magnet and the two total currents are less than a current threshold, the average of any two currents with differences less than the threshold can be determined as the overall current of the magnet. For example, the first actual current and the second actual current can be the currents collected in the i^{th} control period.

For example, for the magnet driving power supply shown in FIG. 5, the power control unit can calculate the total currents at two ends of magnet 105 based on the first actual currents Iₐ₁, I_{b1}, I_{c1}, I_{d1}, Iₐ₂, I_{b2}, I_{c2}, and I_{d2} transmitted by the eight control modules. For instance, the total current of the four control modules on the left side of magnet 105 is I1 = Iₐ₁ + I_{b1} + I_{c1} + I_{d1}, and the total current of the four control modules on the right side of magnet 105 is I2 = Iₐ₂ + I_{b2} + I_{c2} + I_{d2}. The power control unit can compare the second actual current I_{load} of the magnet with the two total currents I1 and I2 to determine whether at least two of the three currents have differences less than the current threshold. For example, if the current threshold is 1% of the current value, it is determined whether at least two currents differ by no more than 1%. If so, the average of any two currents with differences less than the threshold is taken as the collected overall current I of the magnet.

In the embodiments of the present application, the method of selecting two currents from the three obtained currents to determine the collected overall current of the magnet can reduce the impact of sampling errors from a single current. Controlling the magnet driving power supply based on this overall current can improve control reliability.

In some other methods, the power control unit can also directly determine the second actual current of the magnet as the overall current of the magnet, or directly take the average of the total currents at two ends of the magnet as the overall current, or use the average of the second actual current of the magnet and the total current at any segment of the magnet as the overall current.

In step 7044, a first compensation voltage of the magnet is determined based on the first current error between the reference current and the overall current of the magnet.

The power control unit can acquire the reference current I_{ref} of the magnet and compare it with the current overall current I of the magnet to obtain the current error e = I_{ref}-I between the reference current and the overall current. In the embodiments of the present application, this current error e is referred to as the first current error. The first current error represents the current value that should be adjusted based on the current output by the magnet driving power supply. The power control unit can determine the corresponding first compensation voltage based on this first current error to adjust the magnet driving power supply.

The power control unit can calculate the first compensation voltage in conjunction with a proportional-integral controller (PI controller). For example, for the magnet connected to the magnet driving power supply, the proportional coefficient Kₚ and integral coefficient Kᵢ corresponding to the magnet in the PI controller can be preset. The power control unit can determine the first compensation voltage ΔV of the magnet based on the first current error e between the reference current and the overall current of the magnet, the proportional coefficient Kₚ and integral coefficient Kᵢ corresponding to the magnet in the proportional-integral controller, and the duration of current transmission from the capacitor unit to the magnet. The power control unit can feed the calculated first current error e back to the PI controller, which then calculates the first compensation voltage. For example, the first compensation voltage can be calculated using a formula $Δ V = \left({K}_{p}+\frac{{K}_{i}}{s}\right) ⋅ e$, where s refers to the value obtained by integrating the first current error e with respect to the current transmission duration.

In the embodiments of the present application, the power control unit controls the magnet driving power supply according to control periods. In step 7044, the first compensation voltage is calculated based on the first current error between the reference current of the magnet in the (i+1)-th period and the overall current of the magnet in the i^{th} period. The duration for which the capacitor unit transmits current to the magnet, on which the power control unit calculates the first compensation voltage, may be equal to the duration of one control period. Correspondingly, an integral s of the first current error in the i^{th} period can be calculated, and then the first compensation voltage can be calculated using the above-mentioned formula based on this integral.

In step 7046, a second compensation voltage of each control module is determined based on a second current error between the reference current of each control module and the first actual current transmitted in each control module.

In the embodiments of the present application, the currents transmitted by each control module set are required to be as uniform as possible. Therefore, each control module set also has a reference current, which is the same for all sets. Since the current received by the magnet is the superposition of the currents transmitted by multiple control module sets, the reference current of each control module set can be determined based on the reference current of the magnet. The reference current of each control module set is obtained by dividing the reference current of the magnet by the number of control module sets. For the magnet control power supply shown in FIG. 5, the reference current of each control module set is I_{ref}/4, and the reference current of each control module is also I_{ref}/4. The following is an introduction using a control module set consisting of the first control module 101 and the second control module 102 as an example.

The power control unit can compare the reference current of each control module with its transmitted first actual current to obtain the second current error between the reference current and the first actual current. The second current error represents the current value that should be adjusted based on the current transmitted by the control module. The power control unit can determine the corresponding second compensation voltage based on this second current error to adjust the control module. For example, for the first control module 101 in FIG. 5, the second current error e₁ = I_{ref1} - Iₐ₁ between its reference current I_{ref1} and first actual current Iₐ₁ can be determined; for the second control module 102 in FIG. 5, the second current error e₂ = I_{ref1} - Iₐ₂ between its reference current I_{ref1} and first actual current Iₐ₂ can be determined. For other control modules, the second current error and the second compensation voltage are determined, and the power units are controlled in the same manner as for the first control module and the second control module. The operations for other control modules are not separately introduced in the embodiments of the present application.

The power control unit can calculate the second compensation voltage in conjunction with a PI controller. For example, for each control module in the magnet driving power supply, the proportional coefficient corresponding to the control module in the proportional controller (also known as a P controller) can be preset. The power control unit can determine the second compensation voltage of the control module based on the second current error corresponding to each control module and the proportional coefficient. This second compensation voltage can be the product of the second current error and the proportional coefficient. For example, the proportional coefficient corresponding to the first control module 101 is Kₚ₁, and the second compensation voltage of the first control module 101 is Δ*V*1 = *K*ₚ₁·e₁; the proportional coefficient corresponding to the second control module 102 is Kₚ₂, and the second compensation voltage of the second control module 102 is Δ*V*2 = *K*ₚ₂·e₂.

In step 7048, drive signals are transmitted to the power units in each control module set based on the first compensation voltage, second compensation voltage, and the input voltage of each control module.

The power control unit can determine the total compensation voltage of each control module based on the first compensation voltage and the second compensation voltage of each control module to control the power units in the control module. For example, in FIG. 5, the total compensation voltage V1 of the first control module 101 is V1 = ΔV + ΔV1, and the total compensation voltage V2 of the second control module 102 is V2 = ΔV + ΔV2.

The power control unit can also acquire the input voltage of each control module, such as by monitoring the input voltage of the control module through a monitoring unit. Subsequently, based on a ratio of the total compensation voltage of the control module to its input voltage, a duty ratio of each power unit in the control module is determined. Based on this duty ratio, drive signals are transmitted to each power unit in the control module to drive the power units to turn on or off, so that the ratio of the duration for which each power unit is in the on state to the total duration is equal to this duty ratio. For example, a ratio of the duration for which each power unit is in the on state to the total duration of one control period is equal to this duty ratio.

The power control unit can use a modulation module to determine the drive signals of each power unit in the control module based on the total compensation voltage and input voltage of each control module. For example, drive signals for the first power unit T11 and second power unit T12 are generated based on V1, and drive signals for the third power unit T13 and fourth power unit T14 are generated based on V2, and these drive signals are then transmitted to the corresponding power units to control these power units.

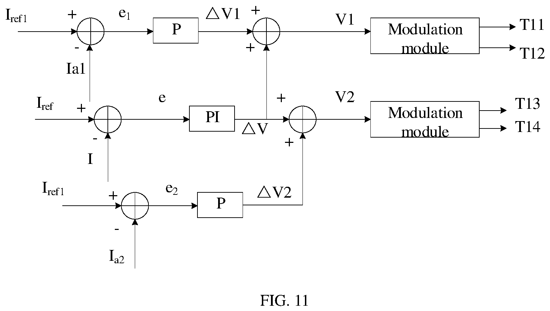

FIG. 11 is a simplified schematic diagram showing a process for generating drive signals for each power unit according to an embodiment of the present application, and FIG. 11 takes the first control module 101 and the second control module 102 as examples. As shown in FIG. 11, the power control unit can obtain a first current error e and second current errors e₁ and e₂ based on a reference current I_{ref1} and first actual currents Iₐ₁ and Iₐ₂ of the first control module 101 and the second control module 102. Subsequently, the first compensation voltage ΔV is calculated using a PI controller, and the second compensation voltages ΔV1 and ΔV2 are calculated using a P controller. The total compensation voltage V1 of the first control module 101 and the total compensation voltage V2 of the second control module 102 are then obtained. By invoking the modulation module, drive signals for the first power unit T11 and the second power unit T12 can be generated based on V1, and drive signals for the third power unit T13 and the fourth power unit T14 can be generated based on V2.

In some implementations, before step 702, the power control unit may control the charging switch in the magnet driving power supply to close, so that an external power supply charges the capacitor unit in the magnet driving power supply. In the charging process, the power control unit can monitor the voltage value of the capacitor unit. When this voltage value reaches a specified voltage value, the charging switch can be controlled to open to stop charging the capacitor unit. After that, the step 702 can be executed to allow the capacitor unit to transmit current to the magnet.

In summary, in the magnet driving method provided by the embodiments of the present application, the power control unit controls the power units in each control module based on the reference current of the magnet and the actual currents in the circuit, so that the multiple control module sets start up in a time-division manner. Consequently, the phases of the current waveforms output by different control module sets are staggered, and the current output to the magnet by these control module sets as a whole is the superposition of currents at different phases, which ensures that the overall current output to the magnet has a small current ripple, providing a relatively stable current to the magnet. Furthermore, it ensures that the current output to the magnet is closer to the reference current of the magnet, so that the effect of transmitting current from the magnet driving power supply to the magnet is improved. Accordingly, it can be ensured that the magnetic fields generated by the magnets can effectively control the plasma to enhance the fusion reaction effectiveness of the fusion reaction device.

The embodiments of the present application also provide a fusion reaction system, which includes a fusion reaction device and the above-mentioned magnet driving system. The fusion reaction device includes a reaction chamber, as well as a central solenoid magnet, a poloidal field magnet, and a toroidal field magnet located around the reaction chamber. The magnet driving system drives each magnet in the fusion reaction device to operate to form a plasma in the reaction chamber and enable the plasma to reach fusion reaction conditions and undergo a fusion reaction.

Since the magnet driving power supply in the magnet driving system can output a relatively stable current to the magnets in the fusion reaction device and perform power supply control based on the reference current of the magnet, it is ensure that the current output to the magnet is closer to the reference current and the magnet effectively forms a magnetic field. Accordingly, it can be ensured that the magnetic fields generated by the magnets can effectively control the plasma to enhance the fusion reaction effectiveness of the fusion reaction device. Moreover, since the same type of magnet driving power supply can be used for each magnet, the process of driving the magnets can be simplified, consequently simplifying the process of nuclear fusion reactions in the fusion reaction device.

The above-mentioned describes specific embodiments of the present application. Other embodiments are within the scope of the appended claims. In some cases, the actions or steps recorded in the claims can be performed in a different order from the embodiments and still achieve the desired results. Additionally, the processes depicted in the drawings do not necessarily require the specific or continuous order shown to achieve the desired results. In certain implementations, multitasking and parallel processing may also be feasible or advantageous.

A person skilled in the art should also be aware that the embodiments described in the specification are all preferred embodiments, and the actions and modules involved are not necessarily required by the present application. In the above-mentioned embodiments, each embodiment has its own focus, and parts not detailed in one embodiment can refer to the relevant descriptions in other embodiments.

The preferred embodiments of the present application disclosed above are intended to help elucidate the present application. The optional embodiments do not exhaustively describe all the details and do not limit the present application to the specific implementations described. Obviously, many modifications and variations can be made based on the content of the present application. The present application selects and specifically describes these embodiments to better explain the principles and practical applications of the present application, so that a person skilled in the art can understand and utilize the present application effectively.

## Claims

1. A magnet driving power supply, comprising: a capacitor unit and a plurality of control module sets, wherein
each control module set comprises two control modules, the plurality of control module sets are connected in parallel, the two control modules in each control module set are connected in parallel, and each control module comprises two power units;
in each control module, a first end of one power unit is connected to a positive electrode of the capacitor unit, a second end of the one power unit and a first end of the other power unit are both connected to an auxiliary node, and a second end of the other power unit is connected to a negative electrode of the capacitor unit; auxiliary nodes of the two control modules in each control module set are configured to be respectively connected to two ends of a magnet in a fusion reaction device; and
the power units in each control module are configured to be turned on or off based on current parameters in a controlled manner, so that the plurality of control module sets are started in a time-division manner to drive the capacitor unit to transmit current to the magnet, wherein the current parameters comprise a reference current of the magnet, an actual current transmitted in each control module, and an actual current received by the magnet.

2. The magnet driving power supply according to claim 1, wherein the power units in each control module are further configured to be turned on or off in each of a plurality of control periods in a controlled manner, so that the plurality of control module sets are started in a time-division manner in each control period, and a startup time interval is a duration obtained by evenly dividing the control period among the plurality of control module sets.

3. The magnet driving power supply according to claim 1 or 2, further comprising a plurality of current-sharing inductors, and the auxiliary node in each control module is configured to be connected to the magnet through one of the current-sharing inductors.

4. The magnet driving power supply according to claim 1 or 2, further comprising a filter inductor and a filter capacitor, wherein in each control module, the first end of the one power unit is connected to the positive electrode of the capacitor unit through the filter inductor; and
a first end of the filter inductor is connected to the first end of the one power unit and a positive electrode of the filter capacitor, a second end of the filter inductor is connected to the positive electrode of the capacitor unit, and a negative electrode of the filter capacitor is connected to a negative electrode of the capacitor unit.

5. The magnet driving power supply according to claim 1 or 2, further comprising a rectifier bridge module, a current-limiting resistor, and a charging switch; wherein
the rectifier bridge module is connected to the capacitor unit through the current-limiting resistor and the charging switch, and the rectifier bridge module is configured to be connected to an external power supply;
the capacitor unit is configured to receive, in a case where the charging switch is turned on, a current transmitted from the external power supply through the rectifier bridge module and the current-limiting resistor.

6. A magnet driving method, applied to the magnet driving power supply according to any one of claims 1 to 5, comprising:
acquiring, in a process in which the capacitor unit in the magnet driving power supply transmits a current to the magnet, a first actual current transmitted in each control module of the magnet driving power supply and a second actual current transmitted in the magnet; and
transmitting, based on the first actual current, the second actual current, and the reference current of the magnet, a drive signal to the power units in each control module set to drive the power units to be turned on or off, so that each control module set is started in a time-division manner to drive the capacitor unit in the magnet driving power supply to transmit current to the magnet.

7. The method according to claim 6, wherein the acquiring, in a process in which the capacitor unit in the magnet driving power supply transmits current to the magnet, the first actual current transmitted in each control module of the magnet driving power supply and the second actual current transmitted in the magnet comprises:
acquiring, in an i-th control period in the process in which the capacitor unit in the magnet driving power supply transmits current to the magnet, the first actual current transmitted in each control module of the magnet driving power supply and the second actual current transmitted in the magnet, wherein the process in which the capacitor unit transmits current to the magnet comprises n control periods, 1 ≤ i ≤ n-1, and n ≥ 2;
the transmitting, based on the first actual current, the second actual current, and the reference current of the magnet, a drive signal to the power units in each control module set comprises:
transmitting, based on the first actual current, the second actual current, and the reference current of the magnet in an (i+1)-th control period, a drive signal to the power units in each control module set in the (i+1)-th control period.

8. The method according to claim 6, wherein the transmitting, based on the first actual current, the second actual current, and the reference current of the magnet, a drive signal to the power units in each control module set comprises:
determining, based on the first actual current and the second actual current, overall current of the magnet;
determining, based on a first current error between the reference current and the overall current of the magnet, a first compensation voltage of the magnet;
determining, based on a second current error between the reference current of each control module and the first actual current transmitted in each control module, a second compensation voltage of each control module; and
transmitting, based on the first compensation voltage, the second compensation voltage, and input voltage of each control module, a drive signal to the power units in each control module set.

9. The method according to claim 8, wherein the determining, based on the first actual current and the second actual current, overall current of the magnet comprises:
determining, based on the first actual current, total current of the control modules connected to two ends of the magnet to obtain two total currents corresponding to the two ends; and
in a case where at least two currents among the second actual current and the two total currents have differences less than a current threshold, determining an average of any two currents with differences less than a current threshold as the overall current of the magnet.

10. The method according to claim 8, wherein the determining, based on the first current error between the reference current and the overall current of the magnet, a first compensation voltage of the magnet comprises:
determining, based on the first current error between the reference current and the overall current of the magnet, a proportional coefficient and an integral coefficient corresponding to the magnet in a proportional-integral controller, and a duration of the capacitor unit transmitting current to the magnet, the first compensation voltage of the magnet.

11. The method according to claim 8, wherein the determining, based on a second current error between the reference current of each control module and the first actual current transmitted in each control module, a second compensation voltage of each control module comprises:
determining, based on the second current error between the reference current of each control module and the first actual current transmitted in each control module, and the proportional coefficient corresponding to the magnet for each control module in a proportional controller, the second compensation voltage of each control module.

12. The method according to claim 6, wherein the transmitting, based on the first compensation voltage, the second compensation voltage, and input voltage of each control module, a drive signal to the power units in each control module set comprises:
determining, based on the first compensation voltage and the second compensation voltage, a total compensation voltage of each control module;
determining, based on a ratio of the total compensation voltage to the input voltage of each control module, a duty ratio of each power unit in each control module; and
transmitting, based on the duty ratio, a drive signal to the power units in each control module set.

13. A magnet driving system, comprising: a power control unit and at least one magnet driving power supply, wherein the magnet driving power supply comprises the magnet driving power supply according to any one of claims 1 to 5;
the power control unit is configured to execute the magnet driving method according to any one of claims 6 to 12 to control each power unit in the magnet driving power supply to drive the magnet driving power supply to transmit current to a connected magnet.

14. A fusion reaction system, comprising: a fusion reaction device and the magnet driving system according to claim 13, wherein
at least one magnet driving power supply in the magnet driving system is respectively connected to at least one magnet in the fusion reaction device, and each magnet driving power supply is configured to transmit pulsed current to a connected magnet, and the at least one magnet comprises at least one of a central solenoid magnet, a poloidal field magnet, and a toroidal field magnet.
